# EUROPEAN PATENT APPLICATION

(11) **EP 4 354 592 A1**
(43) Date of publication of application: **17.04.2024**
(21) Application number: 22275135.6
(22) Date of filing: 13.10.2022
(51) Int. Cl.: H01M 10/60, B32B 15/04, B32B 19/00

(54) **A BARRIER FOR SEPARATING CELLS OF A BATTERY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A barrier for separating cells of a battery is described. The barrier comprises a main body comprising a thermally insulating material wherein the main body comprises a first side and a second side opposite the first side. The barrier further comprises a thermally conductive layer coating at least a part of the first side of the main body. The thermally conductive layer enables heat to be conducted across at least the part of the first side of the main body. The thermally insulating material prevents heat being conducted through the main body from the first side of the main body to the second side of the main body.

## Description

### FIELD

The present invention relates to a barrier for separating cells of a battery.

### BACKGROUND

Thermal management and fire containment of next generation battery cells and/or batteries is vital for their safe use particularly with respect to safety critical applications such as electric vehicles. It is desirable to thermally separate batteries and/or battery cells to reduce the heat transferred from a thermal runaway event on a first battery or battery cell to a second battery or battery cell. This can either: prevent the thermal runaway event on the first battery or battery cell spreading to the second battery or battery cell; or delay the spread of heat so that an appropriate safety action can be taken before the thermal runaway event on the first battery or battery cell spreads to the second battery or battery cell.

While thermally insulating barriers can be used to separate batteries and/or battery cells, these thermally insulating barriers can make it difficult to cool batteries and/or battery cells. While it is known to cool the lower edges of the batteries and/or battery cells, this is not ideal and can provide ineffective cooling. Therefore, thermally conductive barriers can be used as an alternative in order to ensure cooling of the batteries and/or battery cells is not impacted. However, this can increase the chance of a thermal runaway event spreading between batteries or battery cells. This can also decrease the time taken for the spread of a thermal runaway event between batteries or battery cells making it harder to implement any necessary safety action, such as evacuation of an electric vehicle or forced landing of an electric aircraft, before the heat from the thermal runaway event can no longer be contained.

It would therefore be desirable to provide a thermally insulating barrier that can be used to separate batteries and/or battery cells but would still enable effective cooling.

The embodiments described below are not limited to implementations which solve any or all of the disadvantages of known thermally insulating or thermally conductive barriers.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

According to an aspect of the present invention, there is provided a barrier for separating cells of a battery. The barrier comprises a main body comprising a thermally insulating material wherein the main body comprises a first side and a second side opposite the first side and a thermally conductive layer coating at least a part of the first side of the main body. The thermally conductive layer enables heat to be conducted across at least the part of the first side of the main body, and the thermally insulating material prevents heat being conducted through the main body from the first side of the main body to the second side of the main body.

In some examples, the main body is u-shaped and comprises a first flange, a second flange, and a web wherein the first flange and the second flange are connected by the web. In these examples the thermally conductive layer coating at least part of first side of the main body comprises the thermally conductive layer coating at least part of an outer side of the u-shaped main body along the first flange, the second flange and the web.

In some examples, the thermally conductive layer coating at least part of the first side of the main body comprises the thermally conductive layer coating all of the first side of the main body.

In some examples, the thermally conductive layer comprises stripes of the thermally conductive layer wherein the stripes extend across an entire length of the first side of the main body and wherein the stripes of the thermally conductive layer are separated by gaps along a height of the main body. In these examples, the barrier may further comprise a thermally insulating intumescent material in the gaps between the stripes of the thermally conductive layer.

In some examples, the barrier further comprises a thermally insulating intumescent material on the first side of the main body between the main body and the thermally conductive layer. In these examples the thermally conductive layer may comprise stripes of the thermally conductive layer on the thermally insulating intumescent material wherein the stripes of the thermally conductive layer extend across an entire length of the first side of the main body and are separated by gaps along a height of the main body.

In some examples the barrier further comprises a thermally insulating intumescent material coating at least part of the second side of the main body. In these examples, the main body may be u-shaped and comprises a first flange, a second flange, and a web wherein the first flange and the second flange are connected by the web. In addition, the thermally conductive layer coating at least part of first side of the main body may comprise the thermally conductive layer coating at least part of an outer side of the u-shaped main body along the first flange, the second flange and the web, and the thermally insulating intumescent material coating at least part of the second side of the main body comprises the thermally insulating intumescent material coating an inner side of the u-shaped main body along the first flange and the second flange.

In the examples where a thermally insulating intumescent material is sued, the thermally insulating intumescent material may comprise an IP9189 A/B coating.

In some examples, the thermally conductive layer degrades at a temperature above a threshold temperature. In some examples, the thermally conductive layer is electrically insulating. In some examples the main body comprises polyfurfuryl alcohol thermosetting bio-resin, a silicon-based composite, cork, aerogel, or mica. In some examples the main body comprises a composite material manufactured from a material with polyfurfuryl alcohol thermosetting bio-resin, a silicon-based composite, cork, aerogel, or mica. In some examples the thermally conductive layer comprises at least one of hexagonal boron nitride, graphene, graphite or a metallic layer.

In some examples, the barrier comprises at least one hole for passing one or more cables from a battery cell through the barrier. In some examples, the barrier comprises a hole in each corner of the main body wherein each hole is for receiving a respective rod for connecting the barrier to another barrier.

In some examples the barrier is either a divider for positioning between a first and a second cell of the battery or a container for storing the cells of the battery.

According to an aspect of the present invention, there is provided a battery case comprising a container formed of a fire-retardant material wherein the container comprises a first slot for receiving a first cell of a battery and a second slot for receiving a second cell of the battery; and a barrier according to any of the above examples wherein the barrier is between the first slot and the second slot.

In some examples of the battery case, the main body of the barrier is u-shaped and comprises a first flange, a second flange, and a web wherein the first flange and the second flange are connected by the web. In these examples the thermally conductive layer coating at least part of the first side of the main body comprises the thermally conductive layer coating at least part of an outer side of the u-shaped main body along the first flange, the second flange and the web. In these examples an outer side of the first flange and an outer side of the second flange may act as heat sinks to enable heat to be transferred away from the barrier.

In some examples of the battery case wherein the main body of the barrier is u-shaped, the barrier is a first barrier, the container further comprises a third slot for receiving a third cell of the battery, and the battery case further comprises a second barrier according to the example barriers described above wherein the second barrier is between the second slot and the third slot. In these examples the main body of the second barrier is u-shaped and comprises a first flange, a second flange, and a web wherein the first flange and the second flange are connected by the web. The thermally conductive layer of the second barrier coating at least part of the first side of the main body of the second barrier comprises the thermally conductive layer of the second barrier coating at least part of an outer side of the u-shaped main body of the second barrier along the first flange, the second flange and the web. The first flange of the first barrier and the first flange of the second barrier are separated by a gap; and the second flange of the first barrier and the second flange of the second barrier are separated by a gap.

According to an aspect of the present invention, there is provided a battery stack comprising a first battery cell, a second battery cell, and a barrier according to any of the example barriers described above, the barrier separating the first battery cell and the second battery cell.

In some examples of the battery stack the main body of the barrier is u-shaped and comprises a first flange, a second flange, and a web wherein the first flange and the second flange are connected by the web. In these examples the thermally conductive layer coating at least part of the first side of the main body comprises the thermally conductive layer coating at least part of an outer side of the u-shaped main body along the first flange, the second flange and the web. In these examples the first battery cell comprises a thermal pad wherein the thermal pad is in contact with the thermally conductive layer coating the outer side of the web of the main body. In these examples, an outer side of the first flange and the outer side of the second flange may act as heat sinks to enable heat to be transferred away from the barrier and the first and second cells of the battery.

In some examples of the battery stack wherein the barrier is u-shaped, the barrier is a first barrier, and the battery stack further comprises a third battery cell, and a second barrier according to any of the example barriers described above. In these examples, the main body of the second barrier is u-shaped and comprises a first flange, a second flange, and a web wherein the first flange and the second flange are connected by the web. The thermally conductive layer of the second barrier coating at least part of the first side of the main body of the second barrier comprises the thermally conductive layer coating at least part of an outer side of the u-shaped main body of the second barrier along the first flange, the second flange and the web. The second barrier separates the second battery cell and the third battery cell. The second battery cell comprises a thermal pad wherein the thermal pad is in contact with the thermally conductive layer coating the outer side of the web of the main body of the second barrier. The first flange of the first barrier and the first flange of the second barrier are separated by a gap; and the second flange of the first barrier and the second flange of the second barrier are separated by a gap.

### BRIEF DESCRIPTION OF THE FIGURES

Embodiments of the invention will now be described by way of example only with reference to the figures, in which:
Figure 1 shows a u-shaped barrier for separating batteries and/or battery cells;
Figure 2 shows a planar barrier for separating batteries and/or battery cells; and
Figure 3 shows a second u-shaped barrier for separating batteries and/or battery cells;
Figure 4 shows a battery case for storing/holding batteries;
Figure 5 shows a battery stack; and
Figure 6 shows another example of a u-shaped barrier for separating batteries and/or battery cells.

### DETAILED DESCRIPTION

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

This application describes a barrier/divider for separating batteries and/or cells of a battery. Such a barrier would be particularly useful in the electrical vehicle industry where multiple batteries and/or battery cells are often used together. The barrier could be used with any suitable type of battery although one type of battery commonly used in the electrical vehicle industry is lithium-ion batteries. In some examples, for example where pouch batteries are used, the barrier could also act as a compression pad. When being used as a compression pad, the barrier may be formed of a material having good compression properties and rebound capabilities. However, the barrier could also be used with other types of battery where compression pads are not needed or may be used with a separate compression pad.

The barrier comprise a main body comprising a first side and a second side opposite the first side. The first side and second side can also be referred to as a first and second surface of the barrier or as a front and back of the barrier. In some examples the barrier can be considered planar in that that the width/thickness through the barrier from the first side to the second side is considerably less than the length and height of the barrier. The planar barrier may be formed into a shape such as a u-shape, z-shape, s-shape etc. In some examples, the shape selected may aid in stacking any batteries and/or battery cells. For example, a u-shape, z-shape or s-shape can be used to contain the batteries and/or battery cells. When the barrier is formed into a shape, the first side and second side can be considered to be the surface of the planar barrier before it is formed into a shape. Hence, the first side and second side can extend over multiple faces of the barrier.

The main body is formed of a thermally insulating material to prevent heat being conducted through the main body and thus between batteries or battery cells. One side of the main body is coated with a thermally conductive layer to enable heat to be transferred across the surface/side of the main body and hence away from the battery or battery cell. This enables a barrier to be formed that allows heat to be easily transferred away from a battery to enable cooling of the battery but which reduces heat and/or flame transfer between battery cells of the battery to either increase the time taken for a thermal runaway event on one battery cell to impact another battery cell, or, to potentially even prevent a thermal runaway event on one battery cell impacting another battery cell.

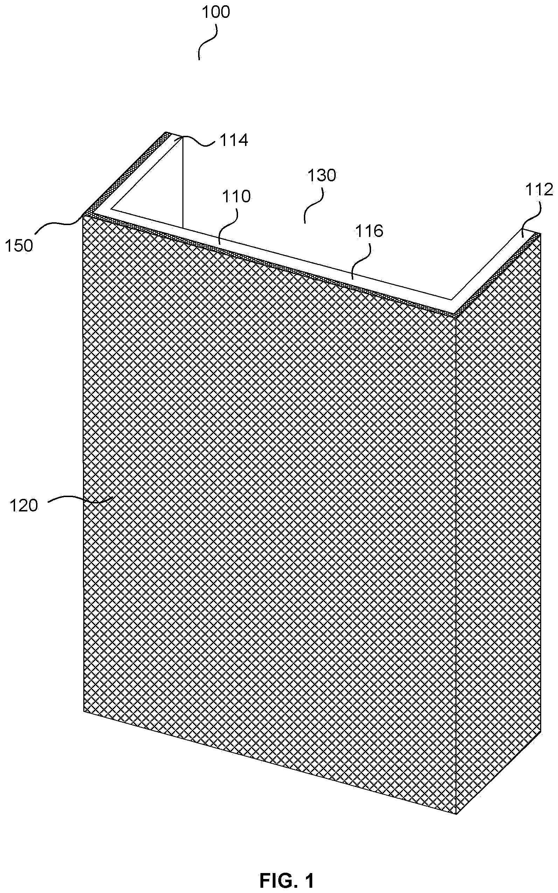

Figure 1 shows a barrier 100 that can be used to separate cells of a battery in accordance with the present disclosure. The barrier 100 comprises a u-shaped main body 110. The u-shaped main body 110 comprises a first flange 112, a second flange 114 and a web 116. The first flange 112 and the second flange 114 are connected to each other via the web 116. The u-shaped main body 110 is formed from or otherwise comprises a thermally insulating material. In particular, the u-shaped main body 110 is formed or otherwise comprises a material that is thermally insulating in that it causes a significant temperature drop from a first side 120 of the barrier 100 to a second side 130 of the barrier 100. The main body 110 can be considered to have two opposing or opposite sides wherein the two opposing sides are a first side 120 and a second side 130 opposite the first side 120. The first side 120 can be considered to be a front side and the second side 130 can be considered to be a back side. Alternatively, the first side 120 can be considered a back side and the second side 130 a front side. As another alternative, the first side 120 can be considered an outer side since it defines the outside of the u-shape while the second side 130 can be considered an inner side since it is contained in the inside of the u-shape. As mentioned above, the sides 120, 130 can also be referred to as a first surface and a second surface or a front and a back of the main body 110. In Figure 1, the main body 110 is u-shaped and the first side 120 and second side 130 extend across multiple faces of the main body 110. In other words the first side 120 and the second side 130 extend across the first flange 112, the web 116, and the second flange 114.

As explained in more detail below, in use, the barrier 100 will be used to separate/divide cells of a battery from each other or to separate/divide batteries from each other. In particular, a first cell of a battery will be positioned on the first side 120 of the barrier 100 and a second cell of a battery will be positioned on the second side 130 of the barrier 100. As the barrier 100 is formed of a thermally insulating material, only a limited amount of heat is conducted from the first side 120 of the barrier 100 to the second side of the barrier 130. Hence, only limited heat from the first cell of the battery reaches the second cell of the battery. In the event of a thermal runaway of a first cell of the battery, the use of the barrier 100 formed of the thermally insulating material reduces heat and/or flame transfer between the cells and reduces the risk or increases the time taken for a thermal runaway of the first cell of the battery to cause a thermal runaway of the second cell of the battery.

However, the use of a barrier 100 formed of a thermally insulating material prevents heat being transferred away from the cells of the battery. This can make it difficult to cool the cells of the battery effectively. To combat this, the barrier 100 further comprises a thermally conductive layer 150. The thermally conductive layer can also be referred to as a thermally conductive coating, a thermally conductive sheet or a thermally conductive film. In some examples the thermally conductive layer 150 may have a through-plane thermal conductivity at or above 5 W/mK, 10 W/mk or 15 W/mK etc. The in-plane thermal conductivity of the thermally conductive layer 150 may be significantly higher to maximise heat transfer to the flanges 112 and 114. For example, the in plane thermal conductive may be above 10 W/mK, 20 W/mK, 30 W/mK, 40 W/mK, 50 W/mK, 60 W/mK, 70 W/mK, 80 W/mK or 100 W/mK. The above values are merely exemplary and both the in-plane and through-plane conductivity levels will be dependent on the conductive layer 150 material. Hence, the through-plane and in-plane thermal conductivity may take other suitable values.

The thermally conductive layer 150 coats at least part of the first side 120 of the main body 110. In the example shown in Figure 1, the thermally conductive layer 150 coats the entire first side 120 of the main body 110. However, as discussed in more detail below, this is not essential. As shown in Figure 1, the thermally conductive layer 150 coats at least part of the first side 120 of the main body 110 which is the outer side of the u-shaped main body 110. The thermally conductive layer 150 coats the at least part of the first side 120 of the main body 110 along the entire length of the first flange 112, the web 116 and the second flange 114. In this context, the length of the main body 110 is considered to be the dimension of the main body 110 along which the u of the u-shape is formed. In other words, the length of the main body 110 follows the u of the u-shaped main body 110. As such, the thermally conductive layer 150 extends along the first flange 112, the web 116, and the second flange 114 and enables heat to be conducted from the web 116 to the first flange 112 and second flange 114. As explained in more detail later the outer side of the first flange 112 and the outer side of the second flange 114 enable heat to be conducted array from the barrier 100.

The thermally conductive layer 150 enables heat to be conducted across at least part of the first side 120 of the main body 110 that is coated by the thermally conductive layer 150. This enables heat to be transferred away from the battery cell and can make it easier to cool the battery cell. However, since the barrier 100 is formed from a thermally insulating main body 110 and the thermally conductive layer 150 does not connect the first side 120 of the main body 110 to the second side 130 of the main body 110, only a limited amount of heat is conducted between the first side 120 and the second side 130 of the main body 110. This reduces the risk of a thermal runaway by a battery cell on one side of the barrier 100 impacting or causing thermal runaway of a second battery cell on the other side of the barrier 100. Hence, the barrier 100 has the advantages of both a thermally conductive and a thermally insulating barrier in that the barrier 100 both reduces heat transfer between battery cells and also enables heat to be conducted away from the battery cells.

As mentioned above, the thermally conductive layer 150 coats at least part of the first side 120 of the main body 110 along a length of the first flange 112, the web 116, and the second flange 114. This means that heat is transferred from the web 116 to the outer sides/edges of the first flange 112 and second flange 114. This provides heat transfer to the outside of the barrier 100. Thus, this provides heat transfer away from the battery cell and the barrier 100. In some examples, the outer side/face/edge of the first flange 112 and the outer side/face/edge of the second flange 114 can act as heat sinks that enable any heat from a battery cell to be transferred to a cold wall, air surrounding the outside of the barrier 100, a heat sink, or any other suitable mechanism for transferring heat away from the barrier 100 and hence the battery cells.

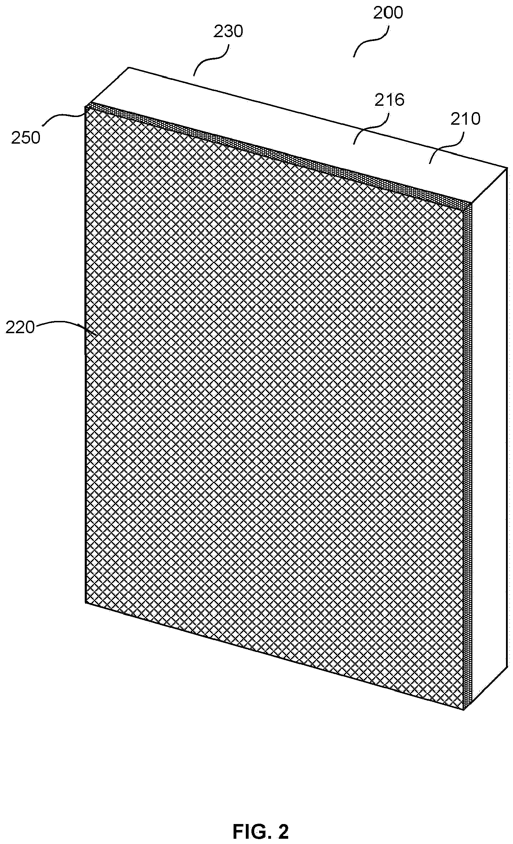

While Figure 1 has been described with respect to a u-shaped barrier, the skilled person would understand that in other examples, the barrier 100 can take other forms. For example, as shown in Figure 2, the barrier 200 may comprise a planar main body 210 comprising a web 216. As with the main body 110, the main body 210 is formed/comprises a thermally insulating material. A thermally conductive layer 250 coats at least part of a first side 220 of the main body 210. This enables heat to be transferred across/along the at least part of the first side 220. However, since the main body 210 is formed of a thermally insulating material heat transfer between the first side 220 of the main body and a second side 230 of the main body 210 opposite the first side 220 is reduced. As with the example in Figure 1, this enables cooling of battery cells while reducing heat transfer between battery cells on the opposite sides of the barrier 200 thus reducing the risk of a thermal runaway of one battery cell on one side of the barrier 200 impacting a second battery cell on the opposite side of the barrier 200. The skilled person would understand that other shapes of barrier 100, 200 could also be used. For example, the barriers 100, 200 could be s-shaped, t-shaped, z-shaped, V-shaped, etc. As such, the barrier 100, 200 could have any suitable shape for separating cells of a battery.

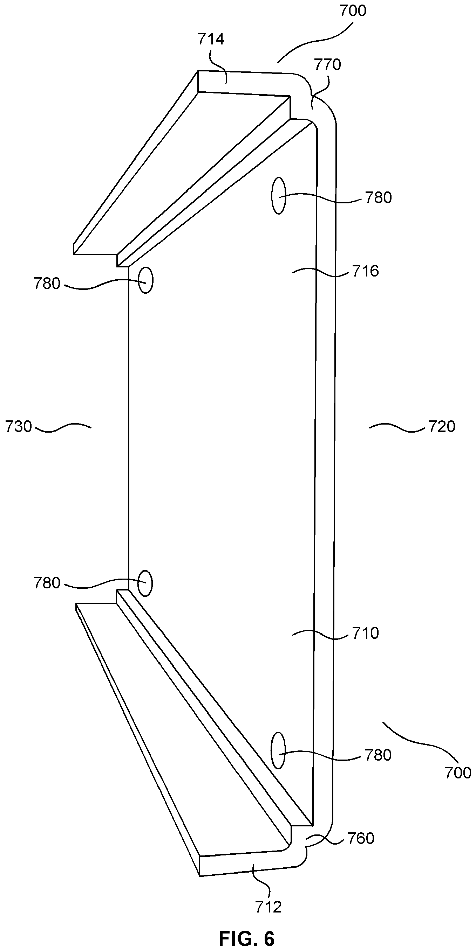

Figure 6 shows a second example of a u-shaped barrier 700 with adapted edges 760 and 770. The u-shaped barrier 700 in Figure 6 has a main body 710 comprising a web 716 that extends between a first flange 712 and a second flange 714. The first side 720 of the main body 710 is an outer side of the u-shape while the second side 730 is an inner side of the u-shape. The edge 760 between the first flange 712 and the web 716 and the edge 770 between the second flange 714 and the web are inset/chamfered/bevelled. In other words a lip is formed along the edge 760 between the web 716 and the first flange 712 and a lip is formed along the edge 770 between the web 716 and the second flange 714. This lip/inset/chamfer/bevel enables a first u-shaped barrier 700 to be placed closer to a second u-shaped barrier in front of the first u-shaped barrier. This reduces heat emissions out of the area contained by the barrier 700 in the event of a thermal run-away conditions. In some examples, the barrier 700 may also comprise holes 780 in the corner of the web 716. These holes 780 can take rods (not shown) which, as described later, can be used to connect barriers 700 and provided a compressive force between barriers 700.

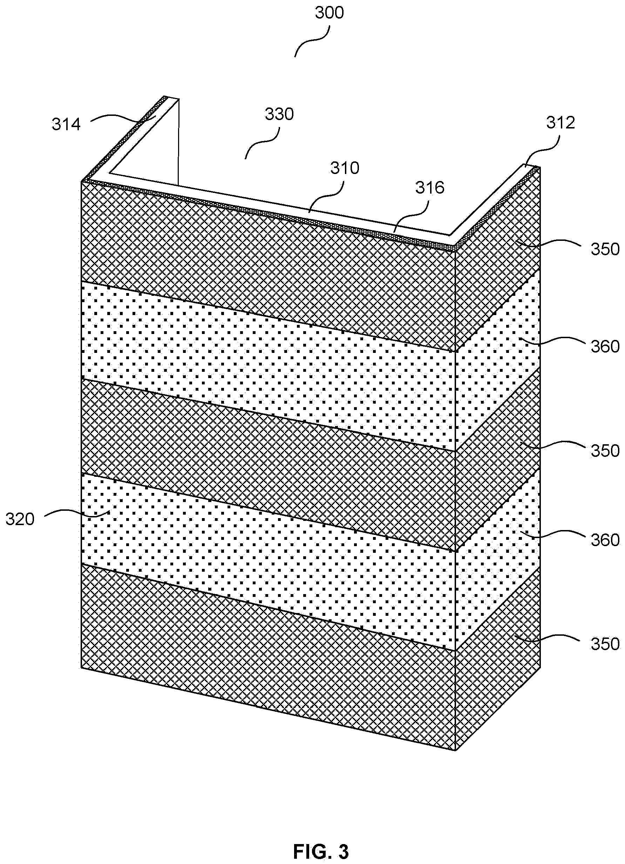

In the examples shown in Figures 1 and 2 the thermally conductive layer 150, 250 coats the entirety of the first surface of the main body 110, 210. In other words, the thermally conductive layer 150, 250 coats all of the first side 120, 220 of the main body 110, 210. However, in other examples the thermally conductive layer 150, 250 coats only part of the first surface of the main body 110, 210. Figure 3 shows a barrier 300 comprising a main body 310 and thermally conductive layer 350. Although the barrier 300 shown in Figure 3 is u-shaped, the skilled person would understand the barrier 300 could also be planar, s-shaped, t-shaped, z-shaped, V-shaped, etc. as described with respect to Figure 2. Hence, the shape of the barrier 300 should not be considered limiting.

As shown in Figure 3, the thermally conductive layer 350 comprises stripes of the thermally conductive layer 350. The stripes of the thermally conductive layer 350 can also be referred to as strips, bands, ribbons, lines, belts etc. of the thermally conductive layer 350. The stripes of the thermally conductive layer 350 extend across an entire length of the first side 320 of the main body 310 of the barrier 300 but are separated from each other by gaps in the thermally conductive layer 350 along a height of the main body 310. The gaps can also be referred to as voids, holes, pockets, breaks etc. in the thermally conductive layer 350. The length of the main body 310/barrier 300 refers to a dimension of the main body 310/barrier 300 along which it is desirable to allow heat flow. In many examples the length of the main body 310/barrier 300 is across or along the main body 310/barrier 300. In many examples, the height of the main body 310/barrier 300 is a vertical dimension of the main body 310/barrier 300 when the barrier 300 is standing up between batteries. However, the skilled person would understand that length and height are being used to refer to two perpendicular dimensions on the main body 310 and depending upon how the barrier 300 is used to separate batteries and/or cells of a battery may comprise any suitable dimension or may run in any suitable direction.

In the example shown in Figure 3, the main body 310 is u-shaped and comprises a first flange 312, a second flange 314 and a web 316 between the first flange 312 and the second flange 314. In this example, the stripes of the thermally conductive layer 350 extending across an entire length of the first side 320 of the main body 310 comprises the stripes extending from the first flange 312 to the second flange 314 via the web 316. In other words, the stripes of the thermally conductive layer 350 coats the main body 310 along the first flange 312, the web 316, and the second flange 314. The first side 320 of the main body 310 comprises the outer side of the u-shaped main body 310. Therefore, as discussed above, heat will be transferred to the outer sides/edges of the first flange 312 and second flange 314. This provides heat transfer to the outside of the barrier 300.

As shown in Figure 3, in some examples where the thermally conductive layer 350 is formed in stripes, the gaps between the stripes may be filled with a thermally insulating intumescent material 360 such as a IP9189 A/B coating or other suitable intumescent material. The thermally insulating intumescent material 360 expands when heated and provides a thermally insulating effect. This reduces the heat that can travel through the main body 310 from the first side of the barrier 320 to the second side of the barrier 330. This means that the amount of heat transferred if a battery cell on one side 320 of the barrier 300 undergoes thermal runaway is reduced. Hence, this reduces the risk of the thermal runaway spreading to another battery cell on the other side 330 of the barrier 300. In some examples the intumescent material or coating may comprise IP9189 A/B. In other examples, other suitably performing intumescent materials may be used.

In other examples, the thermally insulating intumescent material 360 may coat an entirety of the first side 320 of the main body 310. This layer of thermally insulating intumescent material 360 may be positioned between the main body 310 and the thermally conductive layer 350. The thermally conductive layer 350 may then be formed on the thermally insulating intumescent material 360. In some examples, the thermally conductive layer 350 may coat the entirety of the first side 320 of the main body 310 over the thermally insulating intumescent material 360 which also coats the entirety of the first side 320 of the main body 310. In other examples, the thermally conductive layer 350 may be formed on the thermally insulating intumescent material in stripes, as described above. As with the stripes of the thermally conductive layer 350 mentioned above, the stripes can extend across an entire length of the first side 320 of the main body 310. The stripes can be separated by gaps along a height of the main body 310. The thermally insulating intumescent material will therefore be visible in the gaps in the thermally conductive layer 350. This provides different ways to layer the thermally conductive layer 350 and the thermally insulating intumescent material 360 dependent upon the form of battery cells being used with the barrier 300.

In some examples, the barrier 100, 200, 300 may comprise a layer of thermally insulating intumescent material on the second side 130, 230, 330 of the main body 110, 210, 310. In other words, the barrier 100, 200, 300 may comprise a layer of thermally insulating intumescent material on the opposite or opposing side of the main body 110, 210, 310 to the thermally conductive layer 350. This layer of thermally insulating intumescent material provides additional insulation, particularly when the barrier 100, 200, 300 is heated, to prevent heat transferring through the barrier 100, 200, 300 from the first side to the second side. The layer of thermally insulating intumescent material may coat all or part of the second side 130, 230, 330 of the barrier 100, 200, 300. In some examples, when a u-shaped barrier 100, 300 is used, the thermally insulating intumescent material may coat an inner side of the u-shape along the first flange 112, 312, the second flange 114, 314 and the web 116, 316. In other examples, the thermally insulating intumescent coating may coat all or part of the inner side of the first flange 112, 312 and the second flange 114, 314. This provides additional protection to a battery or battery cell in the inside of the u-shaped barrier 100, 300 if a neighbouring battery or battery cell undergoes thermal runaway. As before, the thermally insulating intumescent material may comprise a IP9189 A/B coating. In other examples, other suitably performing intumescent materials may be used

The main body 110, 210, 310 of the barriers described above may be formed of any suitable thermally insulating materials. Example potential materials for the main body 110, 210, 310 of the barrier comprise a polyfurfuryl alcohol thermosetting bio-resin or silicon-based composite. Other example materials for the main body 110, 210, 310 include aerogel, cork and mica or other suitable materials that have a high resistance to heat, a high resistance to flames and a low thermal conductivity. In some examples a polyfurfuryl (PFA) alcohol thermosetting bio-resin may be used because PFA alcohol thermosetting resins are derived from crop waste, have low toxicity and low volatile organic compound emissions making them environmentally friendly. In addition, PFA alcohol thermosetting resins are fire retardant and have excellent temperature and chemical resistance. However, in other examples silicon-based composites, aerogel, cork, or mica may be used as they are compatible with high temperatures. The main body 110, 210, 310 may be formed of a composite material that is manufactured from a material with polyfurfuryl alcohol thermosetting bio-resin, a silicon-based composite, aerogel, cork or mica. The composite material that forms the main body 110, 210, 310 may be lightweight.

The thermally conductive layer 150, 250, 350 may also comprise any suitable material. Example potential materials of the thermally conductive layer 150, 250, 350 are hexagonal boron nitride, graphene, graphite and a metallic layer such as aluminium, copper or stainless steel. In some examples, the thermally conductive layer degrades, for example thermally degrades, above a threshold temperature, such as around above 200°C, 300°C or 400°C. This means that in the event of a thermal runaway of a battery or battery cell, the thermal conductivity along/across the barrier 100, 200, 300 is reduced decreasing the chance of heat being conducted through the barrier 100, 200, 300 from the first side 120, 220, 320 to the second side 130, 230, 330 or vice versa. In some examples, the thermally conductive layer may be electrically insulating. This reduces the need for electrically separating the battery cells from the barrier 100, 200, 300. Hexagonal boron nitride is a material that both thermally degrades at a suitable temperature and is electrically insulating. However, other suitable materials could also be used to form a thermally conductive layer 150, 250, 350 that thermally degrades at a suitable temperature and is electrically insulating.

The barrier 100, 200, 300 being used to separate the batteries and/or battery cells may comprise a compression pad for maintaining pressure on a cell or battery.

In other examples, barrier 100, 200, 300 can be a divider that separates batteries and/or battery cells and may be used with a separate or connected compression pad. In such a case a compression pad could sit on the second side 130, 230, 330 of the barrier 100, 200, 300. In other cases, the barrier 100, 200, 300 can be a divider that separates batteries and/or battery cells and can be used without a compression pad.

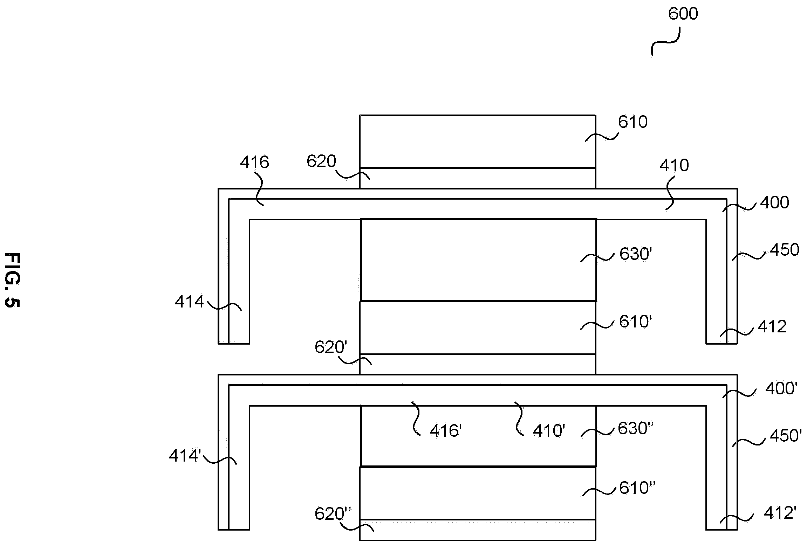

In all these examples, a battery cell may sit against the barrier 100, 200, 300 and be in contract with the thermally conductive layer 150, 250, 350. For example, a thermal pad of the battery cell may be in contact with the thermally conductive layer 150, 250, 350. This is described in more detail below with respect to Figure 5 which shows the barrier 100, 200, 300 in use with battery cells in place.

In other examples, the barrier 100, 200, 300 may comprise a container for storing cells of a battery. The barrier 100, 200, 300 may also take other forms dependent upon the form of barrier 100, 200, 300 that is required to separate battery cells.

In some examples, the barrier 100, 200, 300 may comprise one or more holes for passing through cables from the battery or battery cell. These cables can be used for connecting the battery or battery cell into an electrical circuit. In other examples, the cables may form part of a diagnostic system used to pass details of the functioning of the battery or battery cell to a diagnostic unit or other suitable processor.

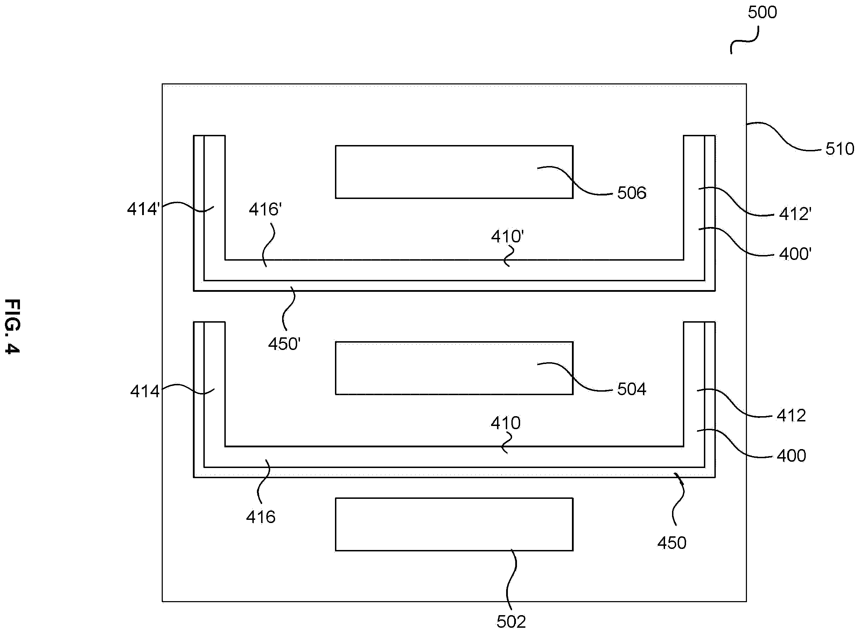

Figure 4 shows an example of a barrier 400 such as the barrier 100, 200, 300 described above in use in a battery case 500. The battery case comprises a container 510 formed of a fire-retardant material. The container 510 comprises a first slot or recess 502 for receiving a first cell of a battery and/or a battery and a second slot or recess 504 for receiving a second cell of a battery and/or a second battery. The first slot 502 and second slot 504 are separated by the barrier 400 which may comprise a barrier 100, 200, 300 as described above with respect to Figures 1, 2 and 3. For example, as shown in Figure 4, the barrier 400 may comprise a u-shaped barrier comprising a main body 410 comprising a first flange 412, a second flange 414 and a web 416 wherein the web 416 extends between the first flange 412 and the second flange 414. The u-shaped barrier 400 is formed of a thermally insulating material and comprises a thermally conductive layer 450 on the outer side of the U. The thermally conductive layer 450 may coat the entirety of the outer side of the U or may be formed in stipes, as described above. The outer side of the first flange 412 and the outer side of the second flange 414 may act as a heat sink to enable heat to be transferred away from the barrier 400. In some examples the outer side of the first flange 412 and the outer side of the second flange 414 may be in contact with the walls of the container 510. In other examples, the outer sider of the first flange 412 and the outer side of the second flange 414 may be separated from the walls of the container 510 by air which enables heat loss. In further examples, the outer side of the first flange 412 and the outer side of the second flange 414 may be in contact with another material/fluid that conducts heat away from the first flange 412 and the second flange 414.

The barriers 400, 400' can be connected together by rods (not shown) that go through holes in the barriers 400, 400' at the corners of the web 410, 410' of the barriers 400, 400'. There may be a hole for a rod through each corner of the web 410, 410' of the barriers 400, 400' or just through the upper, lower, or diagonal corners. The rods hold the barriers 400, 400' in position and allow compression forces to be applied to the barriers 400, 400' to enable the barriers 400, 400' and any batteries or battery cells in the slots 502, 504, 506 to be placed in compression.

While the battery case 500 may hold only two batteries and/or battery cells, in other examples, such as the example shown in Figure 4, the battery case 500 may hold multiple batteries and/or battery cells. For example, as shown in Figure 4, the battery case 500 may comprise a third slot or recess 506 for receiving a third battery and/or battery cell. The second slot 504 and the third slot 506 are separated by a barrier 400' which may take the same form as barrier 400. In other words barrier 400' can comprise a copy of the features of barrier 400. As shown in Figure 4, barrier 400' can be a u-shaped barrier comprising a main body 410' comprising a first flange 412' and a second flange 414' separated by a web 416'. A thermally conductive layer 450' may coat a side of the main body 410' that is an outer side of the U-shape. As with barrier 400, the outer side of the first flange 412' and the outer side of the second flange 414' may act as a heat sink to enable heat to be transferred away from the barrier 400'. The first flange 412 of the first barrier 400 is separated from the first flange 412' of the second barrier 400' by a gap. Similarly the second flange 414 of the first barrier 400 is separated from the second flange 414' of the second barrier 400' by a gap. This ensures pressure relief within the battery case 500. In some examples a spacer can be placed between the first flange 412 of the first barrier 400 and the first flange 412' of the second barrier 400' and a spacer can be placed between the second flange 414 of the first barrier 400 and the second flange 414' of the second barrier 400' to control how close the first barrier 400 and second barrier 400' come to each other. As discussed above with respect to Figure 6, the edges 760, 770 of the barriers can be inset/chamfered/bevelled to reduce the size of the gap. This minimizes heat or flames exiting the side of the barrier 400, 400' during a thermal run-away event.

While, in the example shown in Figure 4, the battery case 500 holds three batteries and/or battery cells, a battery case 500 could hold any suitable number of batteries and/or battery cells. In addition, while Figure 4 shows u-shaped barriers, other shapes of barrier, as described above with respect to Figure 2 could also be used.

Figure 5 shows a battery stack 600 comprising a first battery cell or battery 610, a second battery cell or battery 610', a third battery cell or battery 610", a first barrier 400 and a second barrier 400'. The first barrier 400 and second barrier 400' may comprise a barrier 100, 200, 300 as described with respect to Figures 1, 2 or 3 above. In some examples the battery stack 600 may be in a battery case 500 or a container, such as container 510 for holding the battery stack 600. The first barrier 400 separates the first battery cell or battery 610 and the second battery cell or battery 610'. The second barrier 400' separates the second battery cell or battery 610' and the third battery cell or battery 610". While any suitable barriers 400, 400' could be used, in the example shown in Figure 5, barriers 400 and 400' have u-shaped main bodies 410, 410'. It is noted that while the example shown in Figure 5 shows three batteries or battery cells and two barriers other numbers of battery/battery cells and barriers could be used. In addition, while Figure 5 shows u-shaped barriers 400, 400', as described with respect to Figure 2 any suitable shape of barrier could be used.

The barriers 400, 400' can be connected together by rods (not shown) that go through holes in the barriers 400, 400' at the corners of the web 410, 410' of the barriers 400, 400'. There may be a hole for a rod through each corner of the web 410, 410' of the barriers 400, 400' or just through the upper, lower, or diagonal corners. The rods hold the barriers 400, 400' in position and allow compression forces to be applied to the barriers 400, 400' and batteries or battery cells 610, 610', 610" to enable the batteries or battery cells to be placed in compression.

As with the above barriers, barriers 400 and 400' comprise a main body 410, 410' formed of a thermally insulating material and comprise a thermally conductive layer 450, 450' coating on one side of the main body 410, 410'. The first barrier 400 comprises a u-shaped main body 410 comprising a first flange 412 and a second flange 414 joined by a web 416. The thermally conductive layer 450 is on an outer side of the u-shaped main body 410 along the first flange 412, the second flange 414 and the web 416. As above, the thermally conductive layer 450 may coat the entirety of the outer side of the main body 410 or may be formed in stripes. The first battery or battery cell 610 comprises a thermal pad 620 that provides enhanced thermal contact between the battery 610 and the thermal layer 450. The thermal pad 620 can also be known as a thermally conductive gap filler. As shown in Figure 5, the thermal pad 620 is in contact with the thermally conductive layer 450 of the first barrier 400. For example, as shown in Figure 5, the thermal pad 620 is in contract with the thermally conductive layer 450 that coats the web 416 of the main body 410. This improves conduction of heat out of the first battery or battery cell 600 by providing an improved connection between the battery cell 610 and the thermally conductive layer 450.

As with the first barrier 400, the second barrier 400' comprises a u-shaped main body 410' comprising a first flange 412' and a second flange 414' joined by a web 416'. The thermally conductive layer 450' is across/along an outer side of the u-shaped main body 410' spanning the first flange 412', the second flange 414'and the web 416'. The second battery or battery cell 610' comprises a thermal pad 620' which is in contact with the thermally conductive layer 450' of the second barrier 400', for example the section of the thermally conductive layer 450' that coats the web 416' of the second barrier 400'. The thermal pad 620' can also be known as a thermally conductive gap filler. This aids the second barrier 400' in transferring heat away from the second battery or battery cell 610' since the thermal pad 620' provides an improved connection between the battery cell 610' and the thermally conductive layer 450'.

The third battery or battery cell 610" also comprises a thermal pad 620‴. If the third battery or battery cell 610" is used with a third barrier (not shown) then this thermal pad 620" can be in contact with a thermally conductive layer of the third barrier.

While Figure 5 shows batteries or battery cells 610, 610', 610" comprising thermal pads 620, 620', 620", in other examples the battery or battery cells itself may be contact with the thermally conductive layer 450, 450' so that an entire face of the battery or battery cell is in contract with the thermally conductive layer 450, 450'.

In some examples the barriers 400, 400' can be used as compression pads that are used for conformity in the case of battery cell expansion.

In other examples, the barriers 400, 400' are used with separate none thermally conductive compression pad that are used for conformity in the case of battery cell expansion. In this case, the compression pads also provide further insulation to prevent heat transfer through the barriers 400, 400'. For example, the barriers 400, 400' can be used in conjunction with compression pads 630' and 630". The compression pads 630' and 630" may sit between the battery cell 610' and 610" and the inner side of u-shaped barriers 400, 400'. The battery stack 600 can be stacked such that the compression pad 630' abuts, adjoins or sits next to the web of the inner side of the first barrier 400 and also abuts, adjoins or sits next to the second battery cell 610'. The second battery 610' cell can then abut, adjoin or sit next to the thermal pad 620' of the second battery cell 610' which can in turn abut, adjoin or sit next to the thermally conductive layer 450' of the second barrier 400'. Hence, there can be no gaps or space between the first barrier 400, the second battery cell 610' and the second barrier 400'.

When the barriers 400, 400' are used with separate compression pads 630', 630", the barriers 400, 400' can be considered to be dividers that separate batteries and/or battery cells.

In either case the conductive layer 450, 450' of the barriers 400, 400' can contact either the battery/battery cell 610, 610', 601" or a thermal pad of the battery/battery cell 610, 610', 610" to ensure good contact with the barrier 400, 400'.

The first flange 412 of the first barrier 400 and the first flange 412' of the second barrier 400' are separated by a gap or void. Similarly, the second flange 414 of the first barrier 400 and the second flange 414' of the second barrier 400' are separated by a gap or void. This prevents pressure build-up in the battery stack 600. As discussed above with respect to Figure 6, the edges 760, 770 of the barriers can be inset/chamfered/bevelled to reduce the size of the gap. This minimizes heat or flames exiting the side of the barrier 400, 400' during a thermal run-away event.

The outer sides of the first flanges 412, 412' and the outer sides of the second flanges 414, 414' act as heat sinks to enable heat transfer away from the barriers 400, 400' and batteries 610, 610', 610". As described above with respect to Figure 4, these heat sinks may contact air, or another material or fluid to enable heat to be further transferred away from the battery stack 600. In some examples, the battery stack 600 may be in a battery case such as the one described above with respect to Figure 5. In these examples, the outer sides of the first flanges 412, 412' and second flanges 414, 414' may be in contact with the walls of the battery case.

While Figure 5 shows a battery stack comprising three batteries or battery cells, other numbers of batteries or battery cells could be included in the stack as appropriate. In some examples, every battery or battery cell will be separated from its nearest batteries by a barrier. However, in other examples, there may be multiple batteries or battery cells between barriers. Similarly while Figure 5 shows u-shaped barriers 400, 400', other shapes of barrier as described with respect to Figure 2 could also be used. When the barrier is planar or takes another shape without flanges, the barrier can still be used to conduct heat away from the batteries or battery cells even if there are no flanges to enable heat to be transferred to the outside of the stack 600. As such, the skilled person would understand that the advantages of a combination of a thermal insulation and thermal conduction can be achieved for many shapes of barrier including barriers without flanges.

The barriers 100, 200, 300, 400, 400', container 500 and battery stack 600 described above may be used for an electric vehicle such as an electric or battery powered aircraft or electric or battery powered car. However, the barriers 100, 200, 300, 400, 400' could be used in any suitable application where multiple batteries and/or battery cells are used and/or stored together, for example for storage of electricity for the electric grid or bank powering a house etc. The batteries and/or battery cells being separated by the barriers 100, 200, 300, 400, 400' may comprise lithium-ion batteries and/or battery cells. However, the barriers 100, 200, 300, 400, 400' could be used with any suitable form of battery cell.

In summary, in an example a barrier 100, 200, 300 for separating batteries or battery cells is considered. The barrier 100, 200, 300 comprises a main body 110, 210, 310 formed of a thermally insulating material. A first side 120, 220, 320 of the main body 110, 210, 310 is coated with a thermally conductive layer 150, 250, 350. This enables heat transfer in the plane of the barrier 100, 200, 300 but reduces/prevents heat transfer through the barrier 100, 200, 300. When the barrier 100, 200, 300, is used to separate batteries and/or battery cells, this enables heat to be transferred away from a battery and/or battery cell along the plane of the barrier 100, 200, 300 but reduces heat transfer between batteries and/or battery cells through the barrier 100, 200, 300. This reduces the chance of a thermal runaway event spreading to neighbouring batteries or at least increases the time taken for the spread of a thermal runaway event making any fire easier to contain for a duration that would enable appropriate safety actions (such as exiting a vehicle using the batteries) to be taken.

It will be understood that the benefits and advantages described above may relate to one embodiment or may relate to several embodiments. The embodiments are not limited to those that solve any or all of the stated problems or those that have any or all of the stated benefits and advantages.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of the claims.

## Claims

1. A barrier (100; 200; 300; 400, 400'; 700) for separating cells (610, 610', 610") of a battery, the barrier (100; 200; 300; 400, 400'; 700) comprising:
a main body (110; 210; 310; 410, 410'; 710) comprising a thermally insulating material wherein the main body (110; 210; 310; 410, 410'; 710) comprises a first side (120; 220; 320; 720) and a second side (130; 230; 330; 730) opposite the first side (120; 220; 320; 720); and
a thermally conductive layer (150; 250; 350; 450, 450', 750) coating at least a part of the first side (120; 220; 320; 720) of the main body (110; 210; 310; 410, 410'; 710), whereby:
the thermally conductive layer (150; 250; 350; 450, 450', 750) enables heat to be conducted across at least the part of the first side (120; 220; 320; 720) of the main body (110; 210; 310; 410, 410'; 710); and
the thermally insulating material prevents heat being conducted through the main body (110; 210; 310; 410, 410'; 710) from the first side (120; 220; 320; 720) of the main body (110; 210; 310; 410, 410'; 710) to the second side (130; 230; 330; 730) of the main body (110; 210; 310; 410, 410'; 710).

2. The barrier (100; 200; 300; 400, 400'; 700) of claim 1 wherein:
the main body (110; 210; 310; 410, 410'; 710) is u-shaped and comprises a first flange (112; 312; 412, 412'; 712), a second flange (114; 314; 414, 414'; 714), and a web (116; 316; 416, 416'; 716) wherein the first flange (112; 312; 412, 412'; 712) and the second flange (114; 314; 414, 414'; 714) are connected by the web (116; 316; 416, 416'; 716); and wherein
the thermally conductive layer (150; 250; 350; 450, 450', 750) coating at least part of first side (120; 220; 320; 720) of the main body (110; 210; 310; 410, 410'; 710) comprises the thermally conductive layer (150; 250; 350; 450, 450', 750) coating at least part of an outer side of the u-shaped main body (110; 210; 310; 410, 410'; 710) along the first flange (112; 312; 412, 412'; 712), the second flange (114; 314; 414, 414'; 714) and the web (116; 316; 416, 416'; 716).

3. The barrier (300) of claim 1 or claim 2 wherein:
the thermally conductive layer comprises stripes of the thermally conductive layer (350) wherein the stripes extend across an entire length of the first side (320) of the main body (310) and wherein the stripes of the thermally conductive layer (350) are separated by gaps along a height of the main body (310).

4. The barrier (300) of claim 3 further comprising:
a thermally insulating intumescent material (360) in the gaps between the stripes of the thermally conductive layer (350).

5. The barrier (100; 200; 300; 400, 400'; 700) of claim 1 or claim 2 further comprising:
a thermally insulating intumescent material on the first side (120; 220; 320; 720) of the main body (110; 210; 310; 410, 410'; 710) between the main body (110; 210; 310; 410, 410'; 710) and the thermally conductive layer (150; 250; 350; 450, 450', 750).

6. The barrier (300) of claim 5 wherein:
the thermally conductive layer comprises stripes of the thermally conductive layer (350) on the thermally insulating intumescent material wherein the stripes of the thermally conductive layer (350) extend across an entire length of the first side of the main body (310) and are separated by gaps along a height of the main body (310).

7. The barrier (100; 200; 300; 400, 400'; 700) of any previous claim wherein:
the main body (110; 310; 410, 410'; 710) is u-shaped and comprises a first flange (112; 312; 412, 412'; 712), a second flange (114; 314; 414, 414'; 714), and a web (116; 316; 416, 416'; 716) wherein the first flange (112; 312; 412, 412'; 712) and the second flange (114; 314; 414, 414'; 714) are connected by the web (116; 316; 416, 416'; 716);
the thermally conductive layer (150; 350; 450, 450'; 750) coating at least part of first side (120; 320; 720) of the main body (110; 310; 410, 410'; 710) comprises the thermally conductive layer (150; 350; 450, 450'; 750) coating at least part of an outer side of the u-shaped main body along the first flange (112; 312; 412, 412'; 712), the second flange (114; 314; 414, 414'; 714) and the web (116; 316; 416, 416'; 716); and
the barrier (100; 200; 300; 400, 400'; 700) further comprises a thermally insulating intumescent material coating at least part of the second side (130; 230; 330; 730) of the main body (110; 210; 310; 410, 410'; 710) wherein the thermally insulating intumescent material coating at least part of the second side (130; 330; 730) of the main body comprises the thermally insulating intumescent material coating an inner side of the u-shaped main body (110; 310; 410, 410'; 710) along the first flange (112; 312; 412, 412'; 712) and the second flange (114; 314; 414, 414'; 714).

8. The barrier (100; 200; 300; 400, 400'; 700) of any previous claim wherein the main body (110; 210; 310; 410, 410'; 710) comprises polyfurfuryl alcohol thermosetting bio-resin, a silicon-based composite, cork, aerogel, or mica.

9. The barrier (100; 200; 300; 400, 400'; 700) of any previous claim wherein the thermally conductive layer (150; 250; 350; 450, 450', 750) comprises at least one of hexagonal boron nitride, graphene, graphite or a metallic layer.

10. The barrier (100; 200; 300; 400, 400'; 700) of any previous claim wherein the barrier comprises at least one hole for passing one or more cables from a battery cell through the barrier.

11. The barrier (100; 200; 300; 400, 400'; 700) of any previous claim wherein the barrier (100; 200; 300; 400, 400'; 700) is either a divider for positioning between a first and a second cell of the battery or a container for storing the cells of the battery.

12. A battery case (500) comprising:
a container (510) formed of a fire-retardant material wherein the container (510) comprises a first slot (502) for receiving a first cell of a battery and a second slot (504) for receiving a second cell of the battery; and
a barrier (400) according to any of claims 1 to 10 wherein the barrier (400) is between the first slot (502) and the second slot (504).

13. The battery case (500) of claim 12 wherein:
the barrier (400) is a first barrier
the main body (410) of the first barrier (400) is u-shaped and comprises a first flange (412), a second flange (414), and a web (416) wherein the first flange (412) and the second flange (414) are connected by the web (416);
the thermally conductive layer (450) of the first barrier (400) coating at least part of the first side of the main body (410) of the first barrier (400) comprises the thermally conductive layer (450) coating at least part of an outer side of the u-shaped main body along the first flange (412), the second flange (414) and the web (416);
the container (510) further comprises a third slot (506) for receiving a third cell of the battery;
the battery case (500) further comprises a second barrier (400') according to any of claims 1 to 10 wherein the second barrier (400') is between the second slot (504) and the third slot (506);
the main body (410') of the second barrier (400') is u-shaped and comprises a first flange (412'), a second flange (414'), and a web (416') wherein the first flange (412') and the second flange (414') are connected by the web (416');
the thermally conductive layer (450') of the second barrier (400') coating at least part of the first side of the main body (410') of the second barrier (400') comprises the thermally conductive layer (450') of the second barrier (400') coating at least part of an outer side of the u-shaped main body (410') of the second barrier (400') along the first flange (412'), the second flange (414') and the web (416');
the first flange (412) of the first barrier (400) and the first flange (412') of the second barrier (400') are separated by a gap; and
the second flange (414) of the first barrier (400) and the second flange (414') of the second barrier (400') are separated by a gap.

14. A battery stack (600) comprising:
a first battery cell (610);
a second battery cell (610'); and
a barrier (400) according to any of claims 1 to 10, the barrier (400) separating the first battery cell (610) and the second battery cell (610').

15. The battery stack (600) of claim 14 wherein the barrier (400) is a first barrier, and the battery stack (600) further comprises:
a third battery cell (610"); and
a second barrier (400') according to any of claims 1 to 10 wherein the second barrier (400') separates the second battery cell (610') and the third battery cell (610"); and wherein:
the main body (410) of the first barrier is u-shaped and comprises a first flange (412), a second flange (414), and a web (416) wherein the first flange (412) and the second flange (414) are connected by the web (416);
the main body (410') of the second barrier (400') is u-shaped and comprises a first flange (412'), a second flange (414'), and a web (416') wherein the first flange (412') and the second flange (414') are connected by the web (416');
the thermally conductive layer (450) of the first barrier coating at least part of the first side of the main body (410) of the first barrier comprises the thermally conductive layer (450) coating at least part of an outer side of the u-shaped main body (410) of the first barrier along the first flange (412), the second flange (414) and the web (416);
the thermally conductive layer (450') of the second barrier (400') coating at least part of the first side of the main body (410') of the second barrier (400') comprises the thermally conductive layer (450') coating at least part of an outer side of the u-shaped main body of the second barrier (400') along the first flange (412'), the second flange (414') and the web (416');
the first battery cell (610) comprises a thermal pad (620) wherein the thermal pad (620) is in contact with the thermally conductive layer (450) coating the outer side of the web of the main body (410) of the first barrier (400);
the second battery cell (610') comprises a thermal pad (620') wherein the thermal pad (620') is in contact with the thermally conductive layer (450') coating the outer side of the web (416') of the main body (410') of the second barrier (400');
the first flange (412) of the first barrier (400) and the first flange (412') of the second barrier (400') are separated by a gap; and
the second flange (414) of the first barrier (400) and the second flange (414') of the second barrier (400') are separated by a gap.
